Europäisches Patentamt

European Patent Office

Office européen des brevets

(11) Publication number: **0 151 195**
A1

# (12) EUROPEAN PATENT APPLICATION

(21) Application number: **84100919.4**

(22) Date of filing: **30.01.84**

(51) Int. Cl.⁴: **C 08 K 3/28**
C 08 K 5/32, C 08 L 53/02

(43) Date of publication of application:
**14.08.85** Bulletin **85/33**

(84) Designated Contracting States:
AT BE CH DE FR GB IT LI LU NL SE

(71) Applicant: **PHILLIPS PETROLEUM COMPANY**
**5th and Keeler**
**Bartlesville Oklahoma 74004(US)**

(72) Inventor: **Short, James Newton**
**2360 S.E. Windsor Way**
**Bartlesville Oklahoma 74006(US)**

(74) Representative: **Dost, Wolfgang, Dr.rer.nat.,**
**Dipl.-Chem. et al,**
**Patent- und Rechtsanwälte**
**Bardehle-Pagenberg-Dost-Altenburg & Partner Postfach**
**86 06 20**
**D-8000 München 86(DE)**

(54) Nitrite gel suppressants.

(57) A metal nitrite or organic nitrite is admixed with a monovinyl-substituted aromatic hydrocarbon/conjugated diene copolymer to inhibit gel and fisheye formation in the copolymer.

EP 0 151 195 A1

## NITRITE GEL SUPPRESSANTS

Our invention relates to a method for inhibiting the formation of gels and fisheyes in molded polymer products. Our invention also relates to a novel polymer composition containing a gel and fisheye formation inhibitor. More particularly, this invention relates to the addition of a nitrite to a polymer to inhibit gel and fisheye formation.

The polymers contemplated in the practice of this invention are copolymers formed from (1) a monovinyl-substituted aromatic hydrocarbon monomer and (2) a conjugated diene monomer.

Associated with the fabrication of articles from resinous copolymers of the above-described type are the problems of gel and fisheye formation. The deleterious effects of gels and fisheyes in molded polymer products are well known. Among other things gel and fisheye formation harms surface appearance and causes hole development. To the extent that our invention counteracts this problem, it represents a very real and significant contribution to the art.

The formation of gels is evident in extruded films and sheets and especially in those of thinner gage material from which particles are fabricated by thermal forming techniques into blister packaging, containers, etc. Although not as evident, gels are also present in thicker wall articles made by injection molding or blow molding. The gels are believed to be hard crosslinked polymer particles that originate during the polymerization process and subsequently during finishing or recovery of the polymer cement.

Fisheyes can be differentiated from gels in their manner of formation. They appear to form around nuclei of particulate matter which may be gels or other dense particles such as dirt, trash, char and the like that have sloughed off of an extruder screw or other surface in an extrusion system. The refraction of light from the polymer material immediately surrounding the nucleation point is different from the refraction of light from fisheye-free areas of the article and thus creates a fisheye appearance.

It has been discovered that a small amount of a nitrite can be used to suppress the deleterious formation of gels and fisheyes in articles fabricated from resinous copolymers. Nitrites suitable for this purpose include the metal nitrites derived from the metals of Groups IA, IIA, IIB and IIIA of the Periodic Table of Elements and organic nitrites such as amyl nitrite, dodecyl nitrite and benzyl nitrite.

The most closely related prior art references of which we are aware are U.S. Patent 3,565,853 (Moon), U.S. Patent 3,717,577 (Moon), and U.S. Patent 3,592,794 (Drake). These patents recognize the utility of certain nitrites to stabilize olefin polymers and conjugated diene polymers against "melt flow decrease or dropoff".

U.S. 3,565,853 discloses that olefin polymers can be stabilized to minimize "melt flow dropoff" at elevated temperatures by admixing the polymer with at least 100 ppm of an organic nitrite.

U.S. 3,717,577 discloses that olefin polymers can be stabilized to minimize "melt flow decrease" at elevated temperatures by admixing the polymer with at least 50 ppm of an alkali metal nitrite.

U.S. 3,592,794 discloses that conjugated diene polymers can be stabilized to minimize "melt flow decrease" at elevated temperatures by admixing the polymer with at least 1,000 ppm of an alkali metal nitrite.

Neither these patents nor any other prior art references of which we are aware disclose the use of nitrites to inhibit gel or fisheye formation in copolymers of conjugated dienes and aromatic compounds. More particularly the use of small amounts, i.e., up to 50 ppm of metal nitrites and up to 100 ppm of organic nitrites in such copolymers for any purpose is nowhere contemplated in the prior art.

We have discovered that the incorporation of a small amount of a nitrite into a monovinyl-substituted aromatic hydrocarbon / conjugated diene copolymer can inhibit the formation of gels and fisheyes. 5-50 ppm of a metal nitrite or 5-100 ppm of an organic nitrite based upon total copolymer composition is effective for this purpose.

It is an object of this invention to provide a new copolymer composition stabilized against gel and fisheye formation.

A further object of this invention is to provide a new method for the stabilization of copolymers against gel and fisheye formation.

These and other objects will be made apparent from a study of this disclosure and the appended claims.

The polymer to be employed in accordance with this invention is a resinous linear or radial block copolymer of a conjugated diene and a monovinyl-substituted aromatic hydrocarbon. It is preferred that the conjugated diene monomer contain from about 4 to about 12 carbon atoms per molecule and that the monovinyl-substituted aromatic hydrocarbon monomer contain from about 8 to about 18 carbon atoms per molecule. U.S. Patent 3,639,517 (Kitchen and Szalla) discloses the preparation of some resinous block copolymers suitable for use in the practice of this invention. The disclosure of U.S. 3,639,517 is incorporated by reference into this disclosure.

Examples of conjugated dienes, and mixtures thereof, that may be employed as monomers in the preparation of a suitable copolymer are 1,3-butadiene, isoprene, 2,3-dimethyl-1,3-butadiene, piperylene, 3-butyl-1,3-octadiene and phenyl-1,3-butadiene.

Examples of suitable monovinyl-substituted aromatic hydrocarbon monomers include styrene, 3-methylstyrene, 4-n-propylstyrene, 4-cyclohexylstyrene, 4-dodecylstyrene, 2-ethyl-4-benzyl-styrene, 4-p-tolylstyrene, 4-(4-phenyl-n-butyl)styrene, 1-vinyl-naphthalene and 2-vinylnaphthalene. The monovinyl-substituted aromatic hydrocarbon can contain alkyl, cycloalkyl and aryl substituents and combinations thereof such as alkylaryl.

The currently preferred polymer is a resinous linear or radial butadiene-styrene block copolymer that comprises from about 5 to about 30 weight percent polymerized 1,3-butadiene and from about 95 to about 70 weight percent polymerized styrene with the copolymer having a melt flow in the range of about 0.5 to about 20 g/10 min as determined by ASTM D 1238-65T, condition G.

The metal nitrites to be used in the practice of this invention are the metal nitrites which are derived from the metals of Groups IA, IIA, IIB and IIIA of the Periodic Table of Elements. Specific examples include sodium nitrite, potassium nitrite, calcium nitrite, lithium nitrite, magnesium nitrite, zinc nitrite and aluminum nitrite.

Although currently less preferred, organic nitrites may also be used in the practice of this invention. Suitable organic nitrites can be expressed by the formula RONO wherein R is a linear or cyclic hydrocarbyl group containing from about 5 to about 12 carbon atoms per molecule. Specific examples include n-amyl nitrite, n-hexyl nitrite, n-heptyl nitrite, n-dodecyl nitrite and benzyl nitrite.

The nitrite gel and fisheye formation inhibitor of this invention can be used with conventional stabilizing systems. Conventional stabilizers for the copolymers include various hindered phenolic compounds such as 2,6-di-t-butyl-4-methylphenol; octadecyl [3-(3,5-di-t-butyl-4-hydroxyphenyl)]propionate; di-n-octadecyl (3,5-di-t-butyl-4-hydroxybenzyl)phosphonate; 1,3,5-trimethyl-2,4-6-tris(3,5-di-t-butyl-4-hydroxybenzyl)benzene; 4-((4,6-bis(octylthio)-S-triazin-2-yl)amino)-2,6-di-t-butyphenol; tris(2,4-di-t-butylphenyl)phospite; tris(nonylphenyl)phospite; distearyl pentaerythritol diphosphite, and the like and combinations thereof. Commonly, combinations of a hindered phenol and an organic phosphite can be employed such as the first or second hindered phenol and the second phosphite in the above list. The hindered phenols are generally employed within the range of about 0.05 to about 5 weight percent based on the weight of the polymer (500 to 50,000 ppm based on polymer weight), preferably about 0.1 to 1 weight percent(1000 to 10,000 ppm). The organic phosphite usually falls within about 0.2 to 5 weight percent, preferably about 0.5 to 2 weight percent (2,000 to 50,000 ppm broadly or 5,000 to 20,000 ppm preferably). These conventional stabilizing systems improve the thermal stability of the polymer and inhibit melt flow decrease.

It is contemplated that in the practice of this invention, generally about 1 to about 1,000 ppm (based upon total copolymer composition) of the nitrite will be used. It has been discovered that less than 50 ppm of a metal nitrite or less than 100 ppm of an organic nitrite can be effective in inhibiting gel and fisheye formation. It should be noted that the scope of this invention requires only that a finite amount of the nitrite sufficient to inhibit gel and fisheye formation be used.

If the nitrite is employed in the form of an aqueous solution, treatment of the polymer or resin during polymerization may be counter-productive since water is a polymerization poison. However, gels and fisheyes formed during polymerization are believed to be less of a problem than those formed during the finishing or recovery step and, accordingly, the nitrite may be limited to post-polymerization use with good results. This is presently the preferred method.

A metal nitrite can be admixed with the resin in any suitable manner such that, preferably, even distribution is obtained. In one process the metal nitrite, in finely divided form, can be compounded with the resin to form a concentrate which is subsequently mixed with virgin resin in an extruder or the like to obtain the desired composition. In another process the metal nitrite can be dissolved in water and diluted with an alcohol such as ethanol to obtain a stock solution, e.g., a stock solution comprising 95 volume percent ethanol. Sufficient stock solution to wet the resin particles and to obtain the desired concentration of the stabilizing system can then be employed. The wetted polymer, preferably in the form of particles or pellets, can be tumbled during or after the addition of the stock solution to improve distribution. Following this treatment, solvents are evaporated, for example, by gentle heating, and the heated polymer can be processed into the desired articles.

The organic nitrites can be admixed with the resin by dissolving the organic nitrites in an appropriate organic solvent such as acetone, ethanol, n-hexane, and the like, e.g., 5 to 10 weight percent nitrite and 95 to 90 weight percent solvent, with the solution being coated on the resin pellets, for example, by tumbling, to evenly distribute the nitrite. The solvent is evaporated and the mixture mixed by passage through an extruder. The resin can then be pelletized or otherwise prepared for subsequent use.

## EXAMPLE

A series of samples containing from 10 to 40 ppm calcium nitrite was prepared by dissolving the salt in aqueous ethanol consisting of 5 volume percent $H_2O$ and 95 volume percent absolute ethanol. Sufficient solution was coated on the appropriate weight of a commercially obtained radial butadiene-styrene block copolymer containing about 76 weight percent polymerized styrene units and

0151195

about 24 weight percent polymerized butadiene units. The block copolymer can be further characterized as having a density of 1.01 $g/cm^3$ as determined by ASTM D 792 and a flow rate of about 6 $g/10$ min as determined by ASTM D 1238, condition G. The solvent was evaporated at room temperature in a hood and the dry mixture was extruded and pelletized. The primary thermal stabilizing system for the block copolymer consisted of 0.90 weight percent tris(nonylphenyl) phosphite and 0.24 weight percent octadecyl[3-(3,5-di-t-butyl-4-hydroxyphenyl)]propionate. Also included in the composition was 0.3 weight percent microcrystalline wax as an antiblocking agent.

Another series of samples was prepared by dissolving n-amyl nitrite in dry n-hexane to give a solution containing about 5 weight percent of the organic nitrite. The solution was then used as described above to coat the pellets to provide 20 ppm organic nitrite on one sample and 40 ppm organic nitrite on a second sample. Each sample was dried and extruded into pellets.

The relative formation of gels and fisheyes in each run was tested as follows. A 100-200 g pellet sample was extruded through a clean extruder fitted with a 4" slot film die. The polymer was allowed to set in the extruder for one hour at 450°F (232°C) before extrusion of a 10 mil thick film. Fresh, untreated polymer was used to purge the extruder. Five minutes after purging was started a film sample was taken and mounted on a cardboard holder. The mounted sample was placed in a Cary 14 spectrophotometer and its absorbance measured at 400 millimicrons. The formation of gels and fisheyes, relative to other samples, was measured by the absorbance. A relatively high absorbance indicates a relatively high presence of gels and fisheyes.

The thermal stability of the polymer in each run was tested by measuring melt flow decrease. For this purpose a Monsanto Automatic Capillary Rheometer (ACR) was used. The ACR measures the time (sec.) required to extrude a constant volume of polymer through an orifice after a determined time (min.) at a set temperature. Measurements were made at 250°C after 5, 20, 30 and 40 minute intervals. A comparison of extrusion time (sec.) after 5 minutes to extrusion time (sec.) after 40 minutes provides an indication of thermal stability. The greater the increase in extrusion time (sec.) the less thermally stable the polymer sample, i.e., the greater the extent of polymer crosslinking.

The experimental results are expressed in the following table.

TABLE I

| Run No. | Metal Salt | | Extrusion Time (sec) ACR at 250°C after | | | | Absorbance of 10 mil. Film at 400 millimicrons |
|---|---|---|---|---|---|---|---|
| | Name | PPM | 5 min. | 20 min. | 30 min. | 40 min. | |
| 1 | none | none | 35 | 38 | 50 | 76 | 0.365 (control) |
| 2 | sodium nitrite | 10 | 37 | 31 | 28 | 32 | 0.125 |
| 3 | sodium nitrite | 20 | 34 | 29 | 28 | 29 | 0.115 |
| 4 | sodium nitrite | 40 | 32 | 25 | 24 | 24 | 0.110 |
| 5 | potassium nitrite | 10 | 37 | 34 | 33 | 35 | 0.130 |
| 6 | potassium nitrite | 40 | 33 | 27 | 25 | 25 | 0.115 |
| 7 | calcium nitrite | 10 | 32 | 35 | 39 | 58 | 0.171 |
| 8 | calcium nitrite | 20 | 36 | 33 | 37 | 53 | not determined |
| 9 | calcium nitrite | 40 | 31 | 26 | 25 | 27 | 0.110 |
| 10 | n-amyl nitrite | 20 | 35 | 36 | 48 | 74 | 0.201 |
| 11 | n-amyl nitrite | 40 | 35 | 37 | 50 | 70 | 0.170 |

Control Run 1 shows the results for a resin containing only the primary stabilizing system. The ACR data indicate relatively poor thermal stability in that the polymer appears to be crosslinking in the rheometer at 250°C. The absorbance results are typical for the resin employed and represent a reference standard in this series.

Run 1 shows typical results for a resin containing only a primary stabilizing system. The ACR data more than doubles over the 5 min to 40 min interval indicating poor thermal stability (i.e. the occurance of crosslinking). The measured absorbance (0.365) is typical and represents a reference standard against which other data can be compared.

Runs 2-9 show the benefits of employing a small amount of a metal nitrite in the copolymer composition. The ACR results and the absorbance results indicate that the presence of a small amount of a metal nitrite can improve thermal stability and inhibit the formation of gels and fisheyes.

The ACR and absorbance results corresponding to Runs 2-9 clearly show the benefits of employing small amounts of metal nitrites in the polymer. The lower absorbance values indicate the presence of fewer gels and fisheyes than in the polymer of run 1. The ACR data show substantial improvement in thermal stability.

Data for Runs 10 and 11 indicate that the benefits ascribable to n-amyl nitrite reside primarily in the suppression of gel and fisheye formation. Based upon this test, the organic nitrite did not substantially improve thermal stability.

The examples and data have been given to illustrate the practice of this invention and should not be interpreted to limit the scope of this invention.

Reasonable variation from and modification of the invention disclosed herein is likewise contemplated to be within the scope of this invention and the patent protection desired and sought.

—1—

0151195

# C l a i m s

1. A composition comprising

(a) a resinous block copolymer of a conjugated diene and a monovinyl-substituted aromatic hydrocarbon and

(b) a nitrite of an element selected from Groups IA, IIA, IIB and IIIA of the Periodic Table, or an organic nitrite of the formula RONO wherein R is a linear or cyclic hydrocarbyl group containing from 5 to 12 carbon atoms, said nitrites being present in an amount sufficient to at least partially inhibit gel or fisheye formation in said copolymer, with the proviso that in case of a nitrite of Group IA elements the amount of said nitrite is less than 1000 parts by weight per million parts by weight of said copolymer.

2. The composition of claim 1 characterized in that said nitrite is one of Group IIA, IIB or IIIA elements which nitrite is present in an amount of less than 1000 parts by weight per million parts by weight of said copolymer.

- 2 -

0151195

3. The composition of claim 1 characterized in that said nitrite has the formula RONO, wherein R has the afore-stated meaning, which nitrite is present in an amount of less than 1000 parts by weight per million parts by weight of said copolymer.

4. The composition of any of claims 1 to 3 characterized in that said copolymer is a butadiene/styrene block copolmyer; in particular wherein said butadiene/styrene block copolymer is a linear or radial butadiene/styrene block copolymer.

5. The composition of any of the preceding claims characterized in that said nitrite is present in an amount of less than 100 ppm based upon the total amount of said copolymer and said nitrite; in particular wherein said nitrite is present in an amount of less than 50 ppm based upon the total amount of said copolymer and said nitrite.

6. The composition of any of claims 1, 4 or 5 characterized in that said nitrite is lithium nitrite, sodium nitrite or potassium nitrite.

7. The process of any of claims 1, 2, 4 or 5 characterized in that said nitrite is selected from magnesium, zinc and aluminum nitrite.

8. The process of any of claims 1, 2, 4 or 5 characterized in that said nitrite is calcium nitrite.

9. The process of any of claims 1 and 3 to 5 characterized in that said organic nitrite is selected from n-hexyl, n-heptyl, n-dodecyl and benzyl nitrite; in particular wherein said organic nitrite is n-amyl nitrite.

10. Use of the composition of any of claims 1 to 9 for producing molded articles having reduced gel and/or fisheye formation.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | US-A-3 592 794  (W.O. DRAKE et al.)<br>* claims; examples * | 1,4,6,<br>10 | C 08 K    3/28<br>C 08 K    5/32<br>C 08 L   53/02 |
| | --- | | |
| X | US-H-  103 702  (K.W. WILLCOX et al.)<br>* the entire document * | 1,2,4,<br>6,8,10 | |
| | --- | | |
| X | US-A-4 370 437  (K.W. WILLCOX et al.)<br>* claims * | 1,2,4,<br>6,8,10 | |
| | ----- | | |

|  | TECHNICAL FIELDS SEARCHED (Int. Cl. ³) |
|---|---|
| | C 08 K<br>C 08 L |

The present search report has been drawn up for all claims

| Place of search<br>THE HAGUE | Date of completion of the search<br>07-09-1984 | Examiner<br>FOUQUIER J.P. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82